# EUROPÄISCHE PATENTSCHRIFT

(11) **EP 4 196 686 B1**
(45) Veröffentlichungstag und Bekanntmachung des Hinweises auf die Patenterteilung: **09.04.2025**
(21) Anmeldenummer: 22701151.7
(22) Anmeldetag: 05.01.2022
(51) Int. Cl.: F15B 1/14, B32B 25/00

(54) **TRENNELEMENT**
SEPARATING ELEMENT
ÉLÉMENT DE SÉPARATION

(30) Priorität: 13.02.2021 DE 102021000744
(43) Veröffentlichungstag der Anmeldung: 21.06.2023
(73) Patentinhaber: Hydac Technology Gmbh, 66280 Sulzbach / Saar (DE)
(72) Erfinder: WEBER, Norbert, 66125 Saarbrücken (DE)
(74) Vertreter: Bartels und Partner, Patentanwälte
(86) Internationale Anmeldenummer: PCT/EP2022/050109
(87) Internationale Veröffentlichungsnummer: WO 2022/171367

(56) Entgegenhaltungen:
- EP-A2- 2 042 299
- EP-A2- 2 181 842
- DE-T2- 69 804 886
- DE-U1- 8 226 197
- US-A- 5 653 263
- US-B1- 9 802 476

## Beschreibung

Die Erfindung betrifft ein Trennelement, insbesondere für den Einsatz in Druckspeichern, wie Membranspeichern, mit den Merkmalen im Oberbegriff von Anspruch 1.

Durch DE 10 2014 000 358 A1 ist ein Druckspeicher bekannt, mit einer ein bewegbares Trennelement zwischen Medienräumen bildenden Membran, die aus aneinanderliegenden Lagen unterschiedlicher Materialien aufgebaut ist. Bei einer bevorzugten Ausgestaltung ist vorgesehen, dass die Membran in Aufeinanderfolge
- eine Lage aus Nitrilkautschuk (NBR) mit einer Haftgummierung;
- eine Barrierelage aus Ethylen-Vinylalkohol-Copolymer (EVOH);
- eine imprägnierende Schicht aus Polyvinylacetat (PVAc);
- eine Grundstruktur;
- eine imprägnierende Schicht aus Polyvinylacetat (PVAc);
- eine Barrierelage aus Ethylen-Vinylalkohol-Copolymer (EVOH);
- eine Haftgummierungsschicht;
- eine Barrierelage aus Ethylen-Vinylalkohol-Copolymer (EVOH);
- eine imprägnierende Schicht aus Polyvinylacetat (PVAc);
- eine zweite Grundstruktur;
- eine imprägnierende Schicht aus Polyvinylacetat (PVAc);
- eine Barrierelage aus Ethylen-Vinylalkohol-Copolymer (EVOH); sowie
- eine Haftgummierung an einer Lage aus Nitrilkautschuk (NBR)
aufweist. Die jeweils im Lagenverbund eingesetzte Grundstruktur weist einzelne Filamente auf, wobei durch Eindringen der imprägnierenden Schichten ein Umschließen von Filamenten stattfindet, so dass zwischen der gasdichten Imprägnierung und den Filamenten der Grundstruktur ein inniger, nicht lösbarer Verbund mit gleichbleibend hohem Permeationswiderstand erreicht ist. Dergestalt soll der Gefahr wirksam begegnet sein, dass es aufgrund von Walkbewegungen, die die Membran im Betrieb innerhalb des Druckspeichers zwangsläufig ausführt, im Laufe des Betriebes zu Rissbildungen und infolge dessen zum Ablösen oder Abplatzen der gasdichten Imprägnierung von der Grundstruktur kommen kann. Von besonderem Vorteil ist es dabei, wenn die Grundstruktur aus einem aus Kunststoff gebildeten Gewebe, Gestrick, Gewirk oder Vlies gebildet ist, wobei ein aus Polyamid (PA6.6) gebildetes Kunststoffgewebe, gebildet aus den Filamenten, eingesetzt ist.

Mit der bekannten Mehrlagenlösung für ein elastisch nachgiebiges Trennelement soll im Rahmen eines Einsatzes bei Druckspeichern sichergestellt werden, dass das im Druckspeicher bevorratete Arbeitsgas, wie beispielsweise Stickstoffgas, nicht auf die Flüssigkeitsseite des Speichers mit dem Mineralöl gelangen kann. Ansonsten gelangt ungewollt der Stickstoff auf die Ölseite des Speichers, indem er zunächst in das Elastomermaterial des Trennelementes hineindiffundiert und anschließend unter Verdampfen in die Umgebung in Richtung der Flüssigkeitsseite des Druckspeichers austritt. Auf diese Weise verringert sich die im Speichersystem vorhandene Gasmenge und die Funktionstüchtigkeit nimmt rapide ab, wodurch das Speichersystem unbrauchbar wird und regelmäßig dann auch nicht wiederverwendet werden kann, sondern vielmehr entsorgt werden muss.

Durch den mehrlagigen Aufbau unter Einbezug von Beschichtungen als Lagenmaterial ist ein entsprechend hoher Permeationswiderstand, respektive Gasdichtheit, erreicht; allein ist die bekannte Lösung ausgesprochen aufwendig in der Herstellung und bereits aufgrund der Vielzahl von Schichten und Lagen können Delaminierprozesse nicht ausgeschlossen werden, die das membranartige Trennelement im Einsatz zumindest langfristig unbrauchbar werden lassen.

Die US 9 802 476 B1 beschreibt ein Trennelement bestehend aus mindestens zwei Arten von Lagen aus Kunststoffmaterial, von denen die eine Art einer Lage medienresistent gegenüber Mineralölen ist; und von denen die andere Art einer Lage gegenüber Gasen eine geringe Permeabilität aufweist oder gasdicht ist, wobei die beiden Arten von Lagen bei direkter Anlage fest miteinander verbunden sind und das elastisch nachgiebige Trennelement ergeben, und wobei die Lage der einen Art aus Epichlorhydrin-Kautschuk und die Lage der anderen Art aus Isobuten-Isopren-Kautschuk besteht.

Weitere Trennelemente gehen aus der EP 2 042 299 A2, der EP 0 927 631 A1, der US 5 653 263 A, der EP 2 181 842 A1, der DE 16 00 621 A1, der DE 82 26 197 U1, der EP 698 04 886 T2, der DE 32 19 530 A1 und der US 5 618 629 A hervor.

Ausgehend von diesem Stand der Technik liegt der Erfindung die Aufgabe zugrunde, ein Trennelement zu schaffen, das zum einen medienresistent ist und zum anderen einen hohen Permeationswiderstand bei einfacher Herstellung und in kostengünstiger Weise aufweist.

Eine dahingehende Aufgabe löst ein Trennelement mit den Merkmalen des Patentanspruches 1 in seiner Gesamtheit.

Das erfindungsgemäße Trennelement besteht aus zwei Arten von Lagen aus Kunststoffmaterial,
- von denen die eine Art einer Lage medienresistent gegenüber Mineralölen ist; und
- von denen die andere Art einer Lage gegenüber Gasen eine geringe Permeabilität aufweist oder gasdicht ist,
wobei die beiden Arten von Lagen bei direkter Anlage fest miteinander verbunden sind und das elastisch nachgiebige Trennelement ergeben, und wobei die Lage der einen Art aus Epichlorhydrin-Kautschuk und die Lage der anderen Art aus Isobuten-Isopren-Kautschuk besteht, und ist dadurch gekennzeichnet, dass zwischen zwei Lagen der einen Art eine Lage der anderen Art vollflächig aufgenommen ist.

Dergestalt lässt sich ein Trennelement unter Einsatz von nur zwei verschiedenen Lagenmaterialien in kostengünstiger Weise aufbauen, wobei die Wandstärke des Trennelementes gegenüber der bekannten Lösung entsprechend dünn ausfällt, was die Elastizität für das Trennelement verbessert. Insbesondere im harten Walkbetrieb bei Anwendung des Trennelementes in einem Druckspeicher, wie einem Membranspeicher, kommt es nicht ungewollt zu einem Delaminieren der zwei Arten von Einzellagen, sodass ein langandauernder Einsatz für das Trennelement gewährleistet ist.

Zwischen zwei Lagen der einen Art ist eine Lage der anderen Art vollflächig aufgenommen. Dergestalt lässt sich eine empfindliche Lage, die gegenüber Gasen eine geringe Permeabilität aufweist oder gasdicht ist, vor Beschädigungen schützen; insbesondere kann ein ungewolltes Einreißen oder Ablösen von der benachbarten Lage der einen Art mit der Medienresistenz vermieden werden. Im Bedarfsfall können zur Erhöhung der Dichtheit des Trennelementes in alternierender Reihenfolge mehr als drei Lagen miteinander verbunden sein, wobei vorzugsweise wiederum die zuäußerst liegenden Lagen im Verbund medienresistent gegenüber den Mineralölen sein sollen.

Erfindungsgemäß ist dabei vorgesehen, dass die medienresistente Lage der einen Art aus Epichlorhydrin-Kautschuk besteht, der sich gegenüber Mineralölen als sehr beständig erweist. Dank des geringen Druckverformungsrestes dieses Kautschuks ist auch ein hoher Permeationswiderstand gegenüber Gasen erreicht. Der Härtebereich für diese Lage liegt zwischen 40 und 90 Shore A.

Die Lage der anderen Art mit hohem Gaspermeationswiderstand besteht aus Isobuten-Isopren-Kautschuk. Der dahingehende Kautschuk wird fachsprachlich auch kurz als Butylkautschuk (Butyl) bezeichnet und ist ein Polymer aus der Gruppe der Synthesekautschuke. Die Härte dieses Kautschukmaterials liegt regelmäßig zwischen 40 und 85 Shore A. Neben der geringen Gasdurchlässigkeit ist von Vorteil, dass sich insbesondere bei niedrigen Temperaturen diese Lage ausgesprochen elastisch verhält. Nachteilig ist die kaum vorhandene Beständigkeit gegen Öle und Fette, was jedoch keine Rolle spielt, da insoweit die mittlere Lage von den Lagen aus Epichlorhydrin-Kautschuk (ECO) umfasst ist.

Zur Verwendung des erfindungsgemäßen Trennelementes in einem zugeordneten Membranspeicher ist bevorzugt vorgesehen, dass die miteinander verbundenen Arten von Lagen einen Schalenkörper ausbilden, vorzugsweise in der Art einer Halbschale. Zum Festlegen des Trennelementes im Membranspeicher ist dabei ferner bevorzugt vorgesehen, dass der halbschalenförmige Lagenverbund an seinem freien Ende einen verdickten Rand gebildet aus Lagen der einen Art ausbildet, in die die Lage der anderen Art mit ihrem freien Ende ausmündet. Über den verdickten Rand ist eine Fixlagerung des Trennelementes innerhalb des Membranspeichers erreicht. Die sonstigen Membranteile können sich im Innenraum des Membranspeichers frei bewegen und einen Flüssigkeitsraum von einem Gasraum im Speichergehäuse mediendicht voneinander separieren.

Ein bevorzugtes Verfahren zum Herstellen eines vorstehend beschriebenen Trennelementes besteht darin, dass die jeweilige Art einer Lage als Bahnmaterial vorliegt; und dass die Lagen mittels Thermoumformen unter Bildung des Schalenkörpers miteinander verbunden werden. Das dahingehende Thermoumformen beinhaltet einen Vulkanisierschritt, bei dem die verschiedenen Lagen miteinander fest verbunden werden. Das Umformen in eine Schalenform ist der Innenkontur des Membranspeichers nachempfunden, in dem das Trennelement später zum Einsatz kommt.

Bei einer anderen Art eines erfindungsgemäßen Herstellverfahrens ist vorgesehen, dass die jeweilige Art einer Lage mittels Thermoumformen die Form des zu erzeugenden Schalenkörpers als Teilkörper annimmt und dass anschließend die derart erhaltenen einzelnen Teilkörper unter Bildung des Schalenkörpers als Ganzes wiederum durch Vulkanisieren miteinander verbunden werden. Auch insoweit folgt die Kontur des Schalenkörpers des Trennelementes der Innenkontur des Membranspeichers nach, in dem später das Trennelement verwendet werden soll.

In jedem Fall hat es sich als günstig erwiesen, dem Thermoumformen, respektive dem Vulkanisieren, einen Herstellschritt des Temperns nachfolgen zu lassen, was im Allgemeinen das Erhitzen eines Materials, hier des Lagenverbundes, über einen längeren Zeitraum beschreibt, um dergestalt etwaig auftretende mechanische Spannungen in den Bauteilen abbauen zu können. Mit der derartigen Wärmebehandlung in Form des Temperns wird einem möglichen Delaminieren der Einzellagen im Lagenverbund wirksam begegnet.

Wie bereits dargelegt, lässt sich die Trennschicht besonders bevorzugt in einem Hydrospeicher, wie einem Membranspeicher, verwenden, in dem zum Separieren eines Fluidraums, befüllbar mit Mineralöl, wie Hydrauliköl, das Trennelement dazu dient, diesen von einem Fluidraum, befüllt mit einem Arbeitsgas, wie Stickstoffgas, zu separieren.

Obwohl im Stand der Technik immer wieder versucht worden ist, elastische, hochgasdichte Kunststoffmembrane mit einem erhöhten Permeationswiderstand durch Mehrlagenaufbau zu schaffen, wozu regelmäßig das Aufrakeln, Aufsprühen, Aufgießen oder Aufstreichen von Imprägnier-Schichten dienen musste, kann nunmehr ohne solche Imprägnier-Schichten mit dem Grunde nach nur einem 2- oder vorzugsweise 3-lagigen Schichtaufbau in kostengünstiger Weise eine funktionsfähige Membran erhalten werden, die auch langandauernd in Hydrospeichern jedweder Art einsetzbar ist. Dies hat so keine Entsprechung im Stand der Technik.

Im Folgenden wird das erfindungsgemäße Trennelement anhand eines Ausführungsbeispiels nach der Zeichnung näher erläutert. Dabei zeigen in prinzipieller und nicht maßstäblicher Darstellung die
- Fig. 1: teilweise in Ansicht, teilweise im Längsschnitt einen Membranspeicher mit eingesetztem Trennelement; und
- Fig. 2: in vergrößerter Darstellung (5:1) einen mit X bezeichneten Wandausschnitt eines Trennelementes nach der Fig. 1.

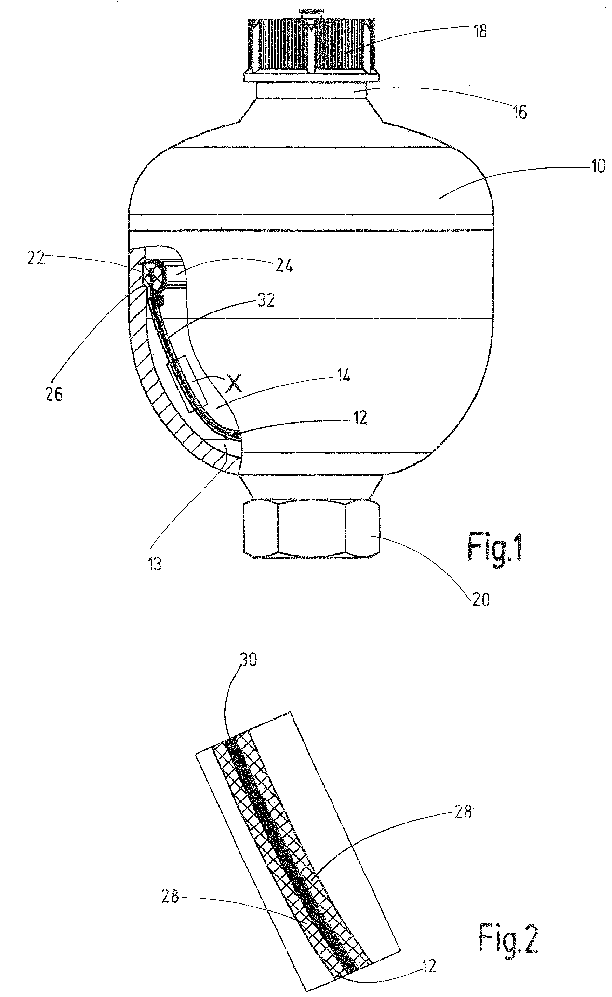

Die Fig. 1 zeigt einen Druck- oder Hydrospeicher in Form eines sogenannten Membranspeichers mit einem als Schweißkonstruktion ausgebildeten Speichergehäuse 10, in dem eine mehrlagig aufgebaute Membran 12 als bewegbares Trennelement eine Flüssigkeitsseite 13 von einer Gasseite 14 trennt. Diese ist über einen Füllanschluss 16 mit einem Arbeitsgas, wie Stickstoffgas, befüllbar. Der Füllanschluss 16 ist von einer Abschlusskappe 18 abgedeckt. Auf der Flüssigkeitsseite 13 befindet sich ein Flüssigkeitsanschluss 20 als Verbindung zu einem nicht gezeigten Hydrauliksystem. Insoweit gelangt von Seiten des Hydrauliksystems ein Hydraulikmedium, wie Mineralöl auf die Flüssigkeitsseite 13 des Speichergehäuses 10. Im Zentralbereich der Membran 12 kann sich an deren dem Flüssigkeitsanschluss 20 zugewandten Seite ein nicht mehr dargestellter Ventilteller befinden, der bei allfälliger Entleerung auf der Flüssigkeitsseite 13 und entsprechend ausgezogener Membran 12 den Flüssigkeitsanschluss 20 verschließt. Die Fig. 1 zeigt die Membran 12 respektive das Trennelement in einer Lage, bei der eine gewisse Menge von Flüssigkeit in Form von Mineralöl auf die Flüssigkeitsseite 13 eingebracht ist und dabei über die elastische Membran 12 den Gasvorrat auf der Gasseite 14 des Speichers vorspannt.

Druckspeicher dieser Gattung, auch in Form sogenannter Membranspeicher, sind Stand der Technik und können in Hydrauliksystemen als Stoßdämpfer oder Pulsationsdämpfer Verwendung finden, um Druckstöße in einem hydraulischen Arbeitskreis abzudämpfen. Sie können ferner als Energiequelle für einen pumpenlosen Notkreislauf eingesetzt werden und eignen sich beispielsweise auch als hydraulische Druckfedern und dergleichen bei Fahrzeugen. Insgesamt lässt sich durch Vorspannen des Gasvorrates auf der Gasseite 14 des Speichers mittels diesem hydraulische Energie abspeichern.

Die Membran 12 in Form des Trennelementes ist an ihrem oberen freien Ende in einem Randwulst 22 verdickt. Die ansonsten gleichmäßig verlaufende Wandstärke des Speichergehäuses 10 ist an dieser Stelle dieses Randwulstes 22 mit einer Wandvertiefung versehen, in die der Randwulst 22 außenumfangsseitig eingreift, der im Übrigen über eine innenseitig umlaufende Metallklammer 24, die elastisch nachgiebig ist, in dieser Position gehalten wird. Dergestalt ist durch die Anlage des Randwulstes 22 der Membran 12 ein Fixlager 26 für die Membran 12 als Ganzes im Speichergehäuse 10 geschaffen.

Die Membran 12 als Trennelement des Membranspeichers ist elastisch nachgiebig. Der Lagenverbund ist in vergrößerter Darstellung in der Fig. 2 wiedergegeben. Insbesondere ist gemäß der Darstellung nach der Fig. 2 ein Dreilagenverbund für die Membran 12 realisiert, bei der die beiden äußeren Lagen 28 die eine Art ausbilden, die gegenüber Mineralölen medienresistent ist. Die beiden gleichdicken Lagen 28 schließen zwischen sich eine Lage 30 der anderen Art ein, die gegenüber Gasen eine geringe Permeabilität aufweist und vorzugsweise vollständig gasdicht ist. Auch die dahingehende Lage 30 ist, von der Wandstärke her betrachtet, in etwa gleich dick wie die die Lage 30 nach außen hin abschließenden beiden Randlagen 28.

Dabei ist die jeweils medienresistente Lage 28 der einen Art aus Epichlorhydrin-Kautschuk gebildet und die Lage 30 der anderen Art aus Isobuten-Isopren-Kautschuk, die insoweit in diesem in Fig. 2 gezeigten Lagenverbund als gasdicht anzusehen ist. Die Lagen 28, 30 sind durch Vulkanisieren fest miteinander verbunden. Etwaig auftretende Spannungen zwischen bzw. in dem Lagenverbund sind durch entsprechendes Tempern beseitigt. Die Formgebung der Membran 12 als Schalenkörper lässt sich mittels Thermoumformen unter Bildung einer Art Halbschale 32 erreichen. Wie des Weiteren die Fig. 1 zeigt, ist der aus den zuäußerst liegenden Lagen 28 gebildete Randwulst 22 als Aufnahme ausgeformt, in der die mittlere Lage 30 mit ihrem oberen freien Ende derart austritt, dass jedenfalls das Wandmaterial des Randwulstes 22 den dahingehend freien Rand noch abdeckt. Besonders vorteilhaft ist es, folgende Spezifikation für die unterschiedlichen Elastomerlagen 28, 30 zu wählen:
- Härte 50 bis 70 Shore A;
- Reißdehnung > 400 % (400 bis 700 %);
- Festigkeit > 10 N/mm²; und
- Kälterichtwert < -10 °C.

Durch die Verwendung von verschiedenen Flüssigkeiten bei unterschiedlichen Temperaturen und den Anforderungen an die Flexibilität werden an die Membranwerkstoffe unterschiedliche Anforderungen gestellt, die sich teilweise widersprechen. So werden Werkstoffe für Tieftemperaturen eingesetzt, die bedingt durch die geforderte Flexibilität jedoch meistens höhere Permeationswerte aufweisen. Werkstoffe hingegen, die die Tieftemperaturflexibilität mit geringer Permeation erreichen, können jedoch Probleme bei der Beständigkeit für bestimmte Medien aufweisen und sind dann nicht einsetzbar. Durch den Einsatz zweier verschiedener Werkstoffe (Compounds), die kombiniert zu einem Produkt gefertigt werden, ist unter Einsatz von ECO mit guter Beständigkeit gegen Mineralöle und Butyl mit geringer Gasdurchlässigkeit eine hochflexible Membran 12 geschaffen, die medienresistent gegenüber Mineralölen und im weitesten Sinne gasdicht gegenüber leichtflüchtigen Arbeitsgasen, wie beispielsweise Stickstoffgas, ist. Dies hat so keine Entsprechung im Stand der Technik.

## Patentansprüche

1. Trennelement bestehend aus mindestens zwei Arten von Lagen aus Kunststoffmaterial,
- von denen die eine Art einer Lage (28) medienresistent gegenüber Mineralölen ist; und
- von denen die andere Art einer Lage (30) gegenüber Gasen eine geringe Permeabilität aufweist oder gasdicht ist,
wobei die beiden Arten von Lagen (28, 30) bei direkter Anlage fest miteinander verbunden sind und das elastisch nachgiebige Trennelement (12) ergeben, und
wobei die Lage (28) der einen Art aus Epichlorhydrin-Kautschuk und die Lage (30) der anderen Art aus Isobuten-Isopren-Kautschuk besteht, **dadurch gekennzeichnet,**
**dass** zwischen zwei Lagen (28) der einen Art eine Lage (30) der anderen Art vollflächig aufgenommen ist.

2. Trennelement nach Anspruch 1, **dadurch gekennzeichnet, dass** alternierender Reihenfolge mehr als drei Lagen (28, 30, 28) miteinander verbunden sind, wobei vorzugsweise die zuäußerst liegenden Lagen (28) im Verbund medienresistent gegenüber Mineralölen sind.

3. Trennelement nach Anspruch 1 oder 2, **dadurch gekennzeichnet, dass** die miteinander verbundenen Arten von Lagen (28, 30) einen Schalenkörper ausbilden, vorzugsweise in der Art einer Halbschale (32).

4. Trennelement nach Anspruch 3, **dadurch gekennzeichnet, dass** der halbschalenförmige Lagenverbund an seinem freien Ende einen verdickten Rand (22) gebildet aus den Lagen (28) der einen Art aufweist, in die die Lage (30) der anderen Art mit ihrem freien Ende ausmündet.

5. Verfahren zum Herstellen eines Trennelementes nach Anspruch 3 oder 4, **dadurch gekennzeichnet, dass** die jeweilige Art einer Lage (28, 30) als Bahnmaterial vorliegt; und dass die Lagen (28, 30) mittels Thermoumformen unter Bildung des Schalenkörpers miteinander verbunden werden.

6. Verfahren zum Herstellen eines Trennelementes nach Anspruch 3 oder 4, **dadurch gekennzeichnet, dass** die jeweilige Art einer Lage (28, 30) mittels Thermoumformen die Form des Schalenkörpers als Teilkörper annimmt und dass anschließend die Teilkörper unter Bildung des Schalenkörpers als Ganzes durch Vulkanisieren miteinander verbunden werden.

7. Verfahren zum Herstellen eines Trennelementes nach Anspruch 5 oder 6, **dadurch gekennzeichnet, dass** dem Thermoumformen, respektive dem Vulkanisieren, ein Herstellschritt des Temperns nachfolgt.

8. Hydrospeicher, insbesondere Membranspeicher, in dem zum Separieren eines Fluidraums (13), befüllbar mit Mineralöl, wie Hydrauliköl, von einem Fluidraum (14), befüllt mit einem Arbeitsgas, wie Stickstoffgas, ein Trennelement (12) nach einem der Patentansprüche 1 bis 4 dient und dass die eine Art von Lage (28) des Trennelementes (12) dem Fluidraum (13) mit dem Mineralöl benachbart in einem Speichergehäuse (10) angeordnet ist.

## Claims

1. Separating element consisting of at least two types of layers of plastics material,
- one type of layer (28) thereof being media-resistant to mineral oils; and
- the other type of layer (30) thereof having low permeability to gases or being gas-tight,
the two types of layers (28, 30) being firmly connected to one another in direct contact and giving rise to the elastically resilient separating element (12), and
one type of layer (28) consisting of epichlorohydrin rubber and the other type of layer (30) consisting of isobutylene-isoprene rubber,
**characterised in that**
between two layers (28) of the one type, a layer (30) of the other type is received across its entire surface.

2. Separating element according to claim 1, **characterised in that** in alternating sequence more than three layers (28, 30, 28) are connected together, the outermost layers (28) in the composite preferably being media-resistant to mineral oils.

3. Separating element according to either claim 1 or claim 2, **characterised in that** the mutually connected types of layers (28, 30) form a shell body, preferably in the form of a half-shell (32).

4. Separating element according to claim 3, **characterised in that** the layered composite in the form of a half-shell has at its free end a thicker edge (22) formed from the layers (28) of one type, into which the layer (30) of the other type emerges with its free end.

5. Method for manufacturing a separating element according to either claim 3 or claim 4, **characterised in that** each type of layer (28, 30) is provided as web material; and **in that** the layers (28, 30) are connected to one another by means of thermoforming to form the shell body.

6. Method for manufacturing a separating element according to either claim 3 or claim 4, **characterised in that** each type of layer (28, 30) assumes the shape of a shell body as a body part by means of thermoforming and **in that** the body parts are then connected together by vulcanisation to form the shell body in its entirety.

7. Method for manufacturing a separating element according to either claim 5 or claim 6, **characterised in that** a tempering manufacturing step follows thermoforming or vulcanisation respectively.

8. Hydraulic accumulator, in particular diaphragm accumulator, in which, in order to separate a fluid chamber (13), which can be filled with mineral oil, such as hydraulic oil, from a fluid chamber (14), filled with a working gas, such as nitrogen gas, a separating element (12) according to one of claims 1 to 4 is used and in that one type of layer (28) of the separating element (12) is arranged in an accumulator housing (10) adjacent to the fluid chamber (13) with the mineral oil.

## Revendications

1. Elément de séparation constitué d'au moins deux types de couches en matière plastique,
- dont l'un type d'une couche (28) est une huile minérale résistante aux milieux ; et
- dont l'autre type d'une couche (30) a une
perméabilité petite au gaz ou est étanche au gaz, dans lequel les deux types de couches (28, 30) sont reliées entre elles solidement par application directe et donnent l'élément (12) de séparation souple élastiquement, et
dans lequel la couche (28) du un type est en caoutchouc d'épichlorhydrine et la couche (30) de l'autre type est en caoutchouc d'isobutène-isoprène,
**caractérisé**
**en ce qu'**entre deux couches (28) du un type est prise sur toute la surface une couche (30) de l'autre type.

2. Elément de séparation suivant la revendication 1, **caractérisé en ce qu'**une succession alternée de plus de trois couches (28, 30, 28) sont reliées entre elles, dans lequel de préférence les couches (28) les plus à l'extérieur du composite sont des huiles minérales résistantes aux milieux.

3. Elément de séparation suivant la revendication 1 ou 2, **caractérisé en ce que** les types, reliés ensemble, de couches (28, 30) forment un corps de coque, de préférence à la manière d'une demi-coque (32).

4. Elément de séparation suivant la revendication 3, **caractérisé en ce que** le composite de couches en forme de demi-coque a, à son extrémité libre, un bord (22) épaissi constitué des couches (28) du un type, dans lesquelles la couche (30) de l'autre type débouche par son extrémité libre.

5. Procédé de fabrication d'un élément de séparation suivant la revendication 3 ou 4, **caractérisé en ce que** le type respectif d'une couche (28, 30) se présente sous la forme d'un matériau en bande ; et **en ce que** les couches (28, 30) sont reliées entre elles au moyen d'un thermoformage avec formation du corps de coque.

6. Procédé de fabrication d'un élément de séparation suivant la revendication 3 ou 4, **caractérisé en ce que** le type respectif d'une couche (28, 30) prend, comme corps partiel au moyen du thermoformage, la forme du corps de coque et **en ce que**, ensuite, on relie entre eux par vulcanisation les corps partiels avec formation du corps de coque dans son ensemble.

7. Procédé de fabrication d'un élément de séparation suivant la revendication 5 ou 6, **caractérisé en ce qu'**au thermoformage, respectivement à la vulcanisation, fait suite un stade de fabrication de la mise en température.

8. Accumulateur hydraulique, en particulier accumulateur à membrane, dans lequel, pour la séparation d'un espace (13) pour du fluide, pouvant être rempli d'une huile minérale, comme de l'huile hydraulique, d'un espace (14) pour du fluide, rempli d'un gaz de travail, comme de l'azote gazeux, est prévu un élément (12) de séparation suivant l'une des revendications 1 à 4, et en ce que le un type de couche (28) de l'élément (12) de séparation est disposé dans une enveloppe (10) d'accumulateur en étant contigu de l'espace (13) pour du fluide ayant l'huile minérale.
